# EUROPÄISCHE PATENTSCHRIFT

(11) **EP 0 403 771 B1**
(45) Veröffentlichungstag und Bekanntmachung des Hinweises auf die Patenterteilung: **09.06.1993**
(21) Anmeldenummer: 90108232.1
(22) Anmeldetag: 30.04.1990
(51) Int. Cl.: B62D 61/12

(54) **Einrichtung zur Gewinnung eines Achslastsignals der Antriebsachse eines Lift-Achsaggregats**
Device for obtaining a load signal from a mechanically sprung and driven axle of running gear comprising a lift-axle
Dispositif d'obtention d'un signal de charge d'un essieu d'un arbre de commande à suspension mécanique ayant un essieu relevable

(30) Priorität: 21.06.1989 DE 3920288
(43) Veröffentlichungstag der Anmeldung: 27.12.1990
(73) Patentinhaber: WABCO Vermögensverwaltungs-GmbH, D-30432 Hannover (DE)
(72) Erfinder: Eckert, Horst, D-3056 Rehburg-Loccum 3 (DE)
(74) Vertreter: Schrödter, Manfred, Dipl.-Ing.

(56) Entgegenhaltungen:
- DE-A- 1 946 446
- DE-A- 2 652 811

## Beschreibung

Die Erfindung betrifft eine Einrichtung zur Gewinnung eines Achslastsignals der mechanisch gefederten Antriebsachse eines aus der Antriebsachse und einer durch Druckbeaufschlagung wenigstens eines Druckmittelelements mit wenigstens einem Abschaltdruck abschaltbaren Liftachse bestehenden Lift-Achsaggregats gemäß dem Oberbegriff des Patentanspruchs 1.

In einem Lift-Achsaggregat der in dem Oberbegriff erwähnten Art wird die Liftachse durch Druckbeaufschlagung des Druckmittelelements mit einem Abschaltdruck oder einem höheren Druck von der Fahrbahn abgehoben und dadurch abgeschaltet. In diesem Zustand wirkt die Antriebsachse als Einzelachse und trägt die volle Achslast. Durch Druckentlastung des Druckmittelelements - seitens des Fahrers oder selbsttätig -können die Liftachse auf die Fahrbahn abgesenkt und damit zugeschaltet und das Lift-Achsaggregat unter Erhöhung seiner Tragkraft zu einer Doppelachse werden.

Die Höhe des Abschaltdrucks hängt unter anderem von der momentanen Achslast des Lift-Achsaggregates und der Auslegung des Druckmittelelements ab. Bei Beaufschlagung des Druckmittelelements mit geringerem Druck als dem Abschaltdruck übernimmt die Liftachse je nach Höhe des Drucks einen Anteil der momentanen Achslast. Herrscht in dem Druckmittelelement nur Umgebungsdruck, ist es also völlig druckentlastet, so bestimmt sich der von der Liftachse übernommene Achslastanteil nur nach Hebelverhältnissen im Lift-Achsaggregat. In diesem Zustand ist die Liftachse voll zugeschaltet.

Die Achslast bzw. der Achslastanteil der Antriebsachse bei abgeschalteter bzw. bei zugeschalteter Liftachse können durch den Weg eines Punktes der Antriebsachse relativ zum Fahrzeugoberbau und durch den Druck des Druckmittelelements beschrieben werden. Bei voll zugeschalteter Liftachse, d.h. bei Umgebungsdruck im Druckmittelelement, ist der Achslastanteil der Antriebsachse proportional der Achslast des kompletten Lift-Achsaggregats und damit auch ein Maß für diese. Beim Zu- und Abschalten der Liftachse, d.h. bei deren Absenken und Anheben, macht der betrachtete Punkt der Antriebsachse einen Wegsprung, der sich zur Achslastbestimmung nicht auswerten läßt.

Eine Einrichtung der eingangs genannten Art ist in der nicht vorveröffentlichten deutschen Patentanmeldung P 38 40 838.4 beschrieben. Diese Schrift gehört jedoch nicht zum Stand der Technik gemäß Artikel 54 EPÜ. In dieser ist auf der Oberfläche des Signalkörpers ein dreidimensionales Kennfeld angeordnet, welches für jede Konstellation von Drehstellung und Axialstellung des Signalkörpers einen vorbestimmten Abstand von einem Punkt des Fahrzeugoberbaus aufweist, welcher Abstand von dem am Fahrzeugoberbau axial verschiebbar geführten Stößel erfaßt und mittels des Stößels in das zu gewinnende Achslastsignal umgesetzt wird. Zur lastabhängigen Einstellung des Signalkörpers und damit des Kennfeldes wird der Signalkörper abhängig vom Weg des Punktes der Antriebsachse relativ zum Fahrzeugoberbau (Einfederung der Antriebsachse) um eine am Fahrzeugoberbau feste Drehachse gedreht und abhängig vom Druck des Druckmittelelements axial verschoben.

Die bekannte Einrichtung ist aufgrund des erforderlichen dreidimensionalen Kennfelds auf der Oberfläche des Signalkörpers aufwendig.

Der Erfindung liegt deshalb die Aufgabe zugrunde, eine Einrichtung der eingangs genannten Art mit einfachen Mitteln so zu verbessern, daß sie sich mit geringerem Aufwand ausführen läßt.

Diese Aufgabe wird durch die in dem Patentanspruch 1 angegebene Erfindung gelöst. Vorteilhafte Ausgestaltungen und Weiterbildungen sind in den Unteransprüchen angegeben.

Durch die im Kennzeichen vorgesehene Zylindereinheit wird die Stößellänge abhängig von dem Druck des Druckmittelelements verlängert, so daß das Achslastsignal aus dem jeweiligen Abstand der Kontur von dem Punkt des Fahrzeugoberbaus und der jeweiligen Stößellänge resultiert.

Die Erfindung läßt sich in Verbindung mit allen geeigneten Druckmitteln ausführen.

Die Erfindung wird nachstehend unter Angabe weiterer Vorteile anhand von in Zeichnungen dargestellten Ausführungsbeispielen erläutert. Dabei werden für funktionsgleiche Bauelemente durchgehend gleiche Bezugszeichen verwendet.

Es zeigen:
- **Fig.1**: eine generelle Anordnung eines Lift-Achsaggregats mit einer Einrichtung zur Gewinnung eines Achslastsignals von dessen Antriebsachse,
- **Fig.2**: Einzelheiten der Einrichtung zur Gewinnung des Achslastsignals,
- **Fig.3**: eine Fortbildung des Gegenstands der Fig.2,
- **Fig.4**: andere Ausgestaltungen der Einrichtung zur
- **Fig.5**: Gewinnung des Achslastsignals.

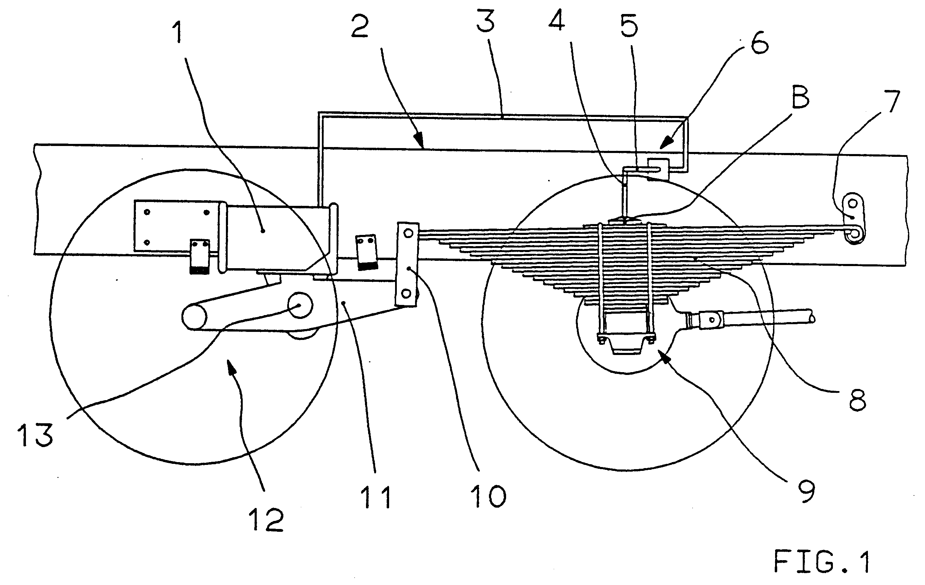

Fig.1 zeigt ausschnittsweise einen generell mit (2) bezeichneten Fahrzeugoberbau, der in bekannter Weise aus einem Fahrzeugrahmen sowie Aufbau- und Anbauteilen besteht. Über wenigstens ein mechanisches Federelement, Aufhänge- und Verbindungsmittel (7, 10, 13), wenigstens einen Doppelhebel (11) und wenigstens ein Druckmittelelement ist an dem Fahrzeugoberbau (2) ein Lift-Achsaggregat aufgehängt. Das mechanische Federelement ist als Blattfeder (8) ausgebildet und wird als solche nachstehend in Bezug genommen. Entsprechendes gilt für das als Liftbalg (1) ausgebildete Druckmittelelement. Ein Liftbalg ist üblich, wenn das verwendete Druckmittel gasförmig, insbesondere Luft, ist. Es ist aber ebenso üblich, als Druckmittelelement Kolbenzylinder einzusetzen, dies insbesondere bei Verwendung eines hydraulischen Druckmittels. Auch hinsichtlich des mechanischen Federelements sind andere Bauarten üblich.

Das Lift-Achsaggregat besteht aus einer durch die Blattfeder (8) mechanisch gefederten Antriebsachse (9) und einer Liftachse (12). Die Liftachse (12) ist als Nachlaufliftachse dargestellt, kann aber in bekannter Weise auch vorauslaufend angeordnet sein.

Die Wirkungsweise eines solchen Lift-Achsaggregats ist in der Beschreibungseinleitung ausführlich erläutert.

Der Vollständigkeit halber ist nachzutragen, daß die dort erwähnten Hebelverhältnisse sich aus den Hebellängen des Doppelhebels (11) und der Länge der Blattfeder (8) ergeben.

Fig.1 zeigt noch die generelle Anordnung einer Einrichtung (6) zur Gewinnung eines Achslastsignals der Antriebsachse (9). Auf diese wird über ein Gestänge (4) und einen Hebel (5) der Weg eines Punktes (B) der Antriebsachse (9) etwa in Richtung der Achslast, also etwa senkrecht zur Fahrbahn, und relativ zum Fahrzeugoberbau (2), das ist die Einfederung der Antriebsachse (9), übertragen. Der Einfachheit und Übersichtlichkeit halber ist der Punkt (B) an einem Bereich der Blattfeder (8) dargestellt, der fest mit der Antriebsachse (9) verbunden ist. Der Punkt (B) kann aber auch an anderen geeigneten Bereichen der Antriebsachse (9) oder der Blattfeder (8) vorgesehen sein.

Außerdem wird der Einrichtung (6) über eine Druckmittelleitung (3) der in dem Liftbalg (1) herrschende Druck zurückgeführt.

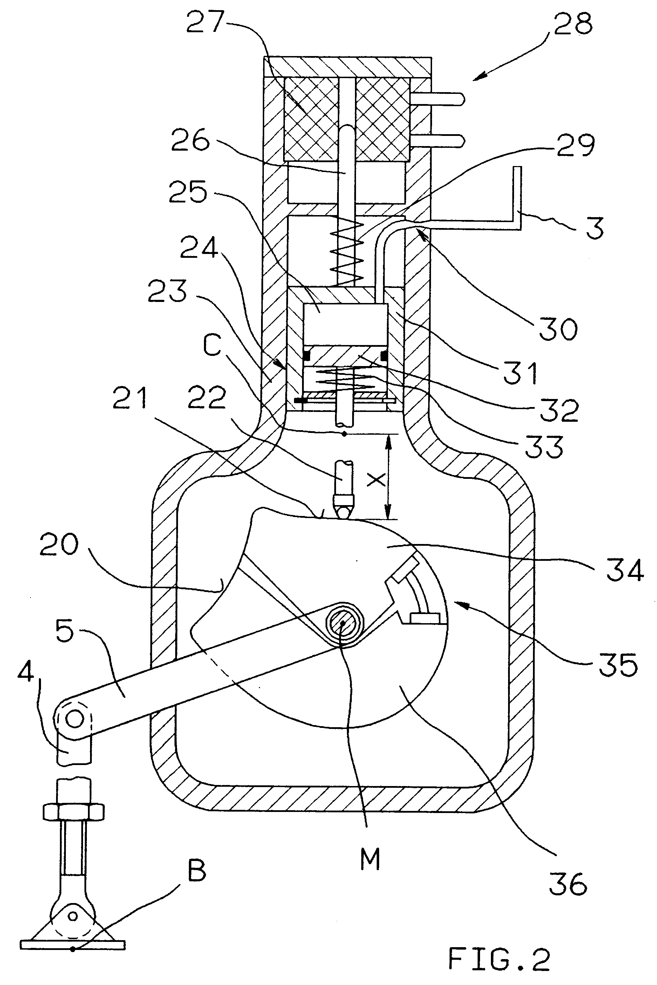

Fig.2 zeigt Einzelheiten der Einrichtung (6).

In einem Gehäuse (23) ist ein Signalkörper (34, 36) um eine Drehachse drehbar gelagert. Die Drehachse wird im folgenden mit dem Bezugszeichen (M) ihres Schnittpunktes mit der Zeichnungsebene in Bezug genommen. Das Gehäuse (23) ist am Fahrzeugrahmen befestigt, so daß es selbst Bestandteil des Fahrzeugoberbaus (2) ist. In dem Gehäuse (23) und damit am Fahrzeugoberbau (2) ist ein Punkt (C) definiert, der innerhalb der durch die weiter unten beschriebenen Funktionen gesetzten Grenzen beliebig angeordnet sein kann. Beispielsweise kann (C) auf der Drehachse (M) liegen.

Die Mantelfläche des Signalkörpers (34, 36) weist eine Kontur (20, 21) auf, die für jede Drehstellung des Signalkörpers (34, 36) einen vorbestimmten Abstand (x) im wesentlichen quer zu der Drehachse (M) von dem Punkt (C) einnimmt. Die Kontur (20, 21) kann an dem Signalkörper (34, 36) flächig oder linienförmig ausgebildet sein.

An dem Signalkörper (34, 36) greift der Hebel (5) an. An seinem freien Ende ist der Hebel (5) mit dem Gestänge (4) verbunden. Dadurch wird der in Rede stehende Weg des Punktes (B) der Antriebsachse (9) in eine Verdrehung des Signalkörpers (34, 36) umgesetzt.

Die Kontur (20, 21) besteht aus zwei Abschnitten (20) bzw. (21), deren einer (21) den Abstand (x) bei abgeschalteter Liftachse (12) und deren anderer (20) den Abstand (x) bei zugeschalteter Liftachse (12) bestimmt. Zwischen diesen Abschnitten weist die Kontur (20, 21) einen nicht näher bezeichneten neutralen Bereich auf, der dem Wegsprung beim Zu- und Abschalten der Liftachse (12) entspricht. Der Verlauf der Kontur (20, 21) wird im Abschnitt (21) durch die Federcharakteristik der Blattfeder (8) und im Abschnitt (20) durch die Federcharakteristik der Kombination von Blattfeder (8) und Liftbalg (1) bestimmt.

In dem Gehäuse (23) und damit am Fahrzeugoberbau (2) ist axial verschiebbar ein Stößel (22, 24, 26) geführt, der den Abstand (x) erfaßt.

Der Stößel (22, 24, 26) besteht aus Endstücken (22) und (26) und einer dazwischen angeordneten Zylindereinheit (24). Die Zylindereinheit (24) ist über die Druckmittelleitung (3) mit dem Druck des Liftbalgs (1) beaufschlagt und stellt die Stößellänge abhängig von diesem Druck ein. Deshalb kann je nach Höhe des Drucks des Liftbalgs (1) eine axiale Verschiebung des einen Endstücks (22) unterschiedliche axiale Verschiebungen des anderen Endstücks (26) auslösen.

Das eine Endstück (22) des Stößels (22, 24, 26) ist gegen den Signalkörper (34, 36) vorgespannt.

Die Einrichtung funktioniert wie folgt.

Jeder Weg des Punktes (B) der in Rede stehenden Art wird über das Gestänge (4) und den Hebel (5) auf den Signalkörper (34, 36) übertragen und verdreht diesen entsprechend. Das eine Endstück (22) des Stößels (22, 24, 26) folgt dabei der Kontur (20, 21) und verschiebt sich, dadurch den Abstand (x) erfassend, entsprechend. Das andere Endstück (26) legt dabei eine aus der Verschiebung des einen Endstücks (22) und der Änderung der Stößellänge resultierende Verschiebung zurück. Diese resultierende Verschiebung des anderen Endstücks (26) kennzeichnet, je nach Betriebszustand der Liftachse (12), die Achslast bzw. den Achslastanteil der Antriebsachse (9) und liefert damit das zu gewinnende Achslastsignal. Bei voll zugeschalteter Liftachse entspricht dieses - siehe weiter oben - auch der Achslast des kompletten Lift-Achsaggregats. Es seien noch einige konstruktive Einzelheiten der dargestellten Einrichtung erläutert.

Die erwähnte Vorspannung des Stößels (22, 24, 26) gegen den Signalkörper (34, 36) erfolgt über eine sich einerseits an einem geeigneten Teil des Stößels (22, 24, 26) und andererseits am Gehäuse (23) abstützende Feder (29), kann aber auch auf jede andere geeignete Art erfolgen.

Die Zylindereinheit (24) besteht aus einem Zylinder (31) und einem Kolben (32), zwischen denen eine mit der Druckmittelleitung (3) verbundene Kammer (25) eingeschlossen ist. Entgegen dem Druck in der Kammer (25) ist der Kolben (32) durch eine sich einerseits an dem Kolben (32) und andererseits an dem Zylinder (31) abstützende Feder (33) vorgespannt. Der Kolben (32) ist mit dem einen Endstück (22) verbunden; der Zylinder (31) ist mit dem anderen Endstück (26) verbunden.

Solange in dem Liftbalg (1) und damit in der Kammer (25) Umgebungsdruck herrscht, verschiebt die Feder (33) den Kolben (32) in Richtung geringsten Volumens der Kammer (25) und stellt damit die geringste Stößellänge ein. Mit zunehmendem Druck in dem Liftbalg (1) und damit in der Kammer (25) federt die Feder (33) zunehmend ein und ermöglicht dadurch eine druckabhängige Verschiebung des Kolbens (32) im Zylinder (31) in Richtung größten Volumens der Kammer (25) mit entsprechender Spreizung der Zylindereinheit (24) und Vergrößerung der Stößellänge als Folge.

Die Feder (33) ist derart ausgebildet und/oder einstellbar, daß beim Abschaltdruck in dem Liftbalg und damit in der Kammer (25) der Kolben (32) im Zylinder (31) gerade die Stellung größten Volumens der Kammer (25) und dadurch der Stößel (22, 24, 26) gerade die größte Stößellänge annehmen. Ein Überschreiten der erwähnten größten Stößellänge für den Fall eines Anstiegs des Drucks im Liftbalg (1) und in der Kammer (25) über den Abschaltdruck hinaus wird in nicht näher dargestellter Weise durch Anschlagen des Kolbens (32) an einem Anschlag am Zylinder (31) oder durch das Zublockgehen der Feder (33) verhindert.

In Fortbildung des bisher beschriebenen Umfangs der Einrichtung weist diese in der Druckmittelleitung (3) eine Drossel (30) auf. Diese verhindert, daß jede fahrbahnbedingte Druckspitze im Liftbalg (1) in die Kammer (25) und damit auf die Stößellänge sowie auf das Achslastsignal durchschlägt.

Eine andere Fortbildung besteht darin, daß zum Ausgleich von Einbautoleranzen und Toleranzen der Federcharakteristik der Blattfeder (8) und des Liftbalgs (1) der Signalkörper (34, 36) in nicht näher dargestellter Weise aus zwei Teilen (34) und (36) mit je einem Abschnitt (21) bzw. (20) der Kontur (20, 21) besteht, deren Lage zueinander durch eine schematisch angedeutete Einstellvorrichtung (35) eingestellt werden kann. Unter Verzicht auf diese Möglichkeit kann der Signalkörper in nicht näher dargestellter Weise einteilig ausgeführt werden.

Das von der Einrichtung (6) erzeugte Achslastsignal in Form der resultierenden Verschiebung des anderen Endstücks (26) kann auf jede geeignete Art ausgewertet werden. Im vorliegenden Ausführungsbeispiel ist der Stößel (22, 24, 26) zu diesem Zweck als Fühler eines generell mit (28) bezeichneten elektrischen Wegsensors ausgebildet. Der Wegsensor (28) weist in bekannter Weise einen schematisch angedeuteten Stator (27) auf, in den das andere Endstück (26) des Stößels (22, 24, 26) nach Maßgabe seiner resultierenden Verschiebung unterschiedlich tief eintaucht. Der Wegsensor (28) liefert daraufhin ein entsprechendes elektrisches Achslastsignal. Dieses Ausführungsbeispiel ist deshalb in vorteilhafter Weise im Zusammenhang mit speziellen Steuerungs- und/oder Regelungsaufgaben eines Lift-Achsaggregates einsetzbar. Beispielsweise ist insoweit an jeweils elektronische lastabhängige Bremskraftregelung, Traktionssteuerung, Anfahrhilfe, Antriebsachs-Überlastungsschutz usw. zu denken.

Dabei bedeuten "Antriebsachs-Überlastungsschutz", daß mittels einer geeigneten Steuereinrichtung die Liftachse (12) automatisch zugeschaltet wird, wenn die Antriebsachse (9) bis zum zulässigen Wert ausgelastet ist. Bei der "Traktionssteuerung" wird über eine geeignete Steuereinrichtung der Druck im Liftbalg (1) derart gesteuert, daß die einmal erreichte zulässige Achslast der Antriebsachse (9) eingeregelt wird. Dadurch wird sichergestellt, daß von der Antriebsachse (9) stets die größtmögliche Vortriebskraft auf die Fahrbahn übertragen werden kann. Bei der "Anfahrhilfe" wird durch eine geeignete Steuereinrichtung der Druck im Liftbalg (1) kurzzeitig so gesteuert, daß die Antriebsachse (9) ebenso kurzzeitig überlastet wird. Dadurch wird die von der Antriebsachse (9) auf die Fahrbahn übertragbare Vortriebskraft kurzzeitig erhöht, was insbesondere beim Anfahren, zumal auf einer Fahrbahn mit geringem Reibwert, von Vorteil ist.

In nicht dargestellter Weise kann die soeben beschriebene Zuordnung der Teile der Zylindereinheit (24) zu den Endstücken (22) und (26) des Stößels (22, 24, 26) auch umgekehrt werden. Entsprechende Ausbildung des Wegsensors (28) vorausgesetzt, kann die Zylindereinheit auch derart ausgebildet sein, daß sie eine druckabhängige Verkürzung der Stößellänge bewirkt.

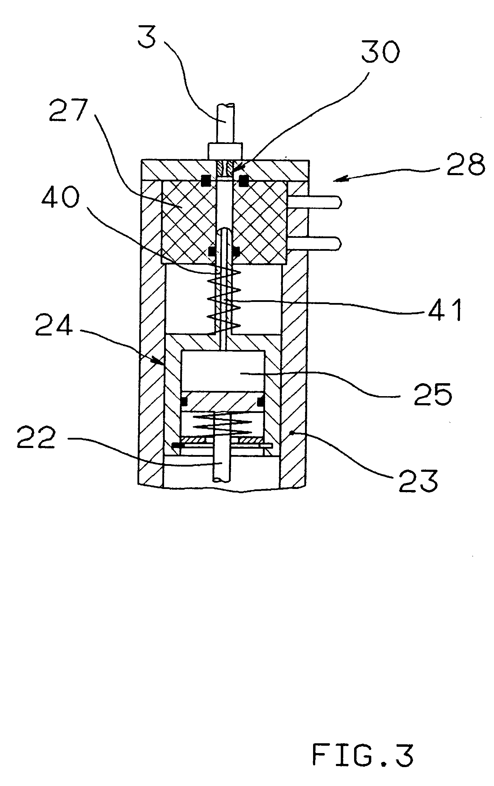

Fig. 3 zeigt in einem Ausschnitt eine Fortbildung des Ausführungsbeispiels nach Fig.2, welche sich von jenem in den nachstehend erläuterten Einzelheiten unterscheiden. Das in den Stator (27) eintauchende andere Endstück (40) des hier mit (22, 24, 40) bezeichneten Stößels ist in dem Stator (27) abgedichtet geführt. Die Druckmittelleitung (3) vom Liftbalg (1) mündet in den nicht bezeichneten Innenraum des Stators (27). Zur Verbindung dieses Innenraums mit der Kammer (25) ist in dem anderen Endstück (40) ein Verbindungskanal (41) vorgesehen.

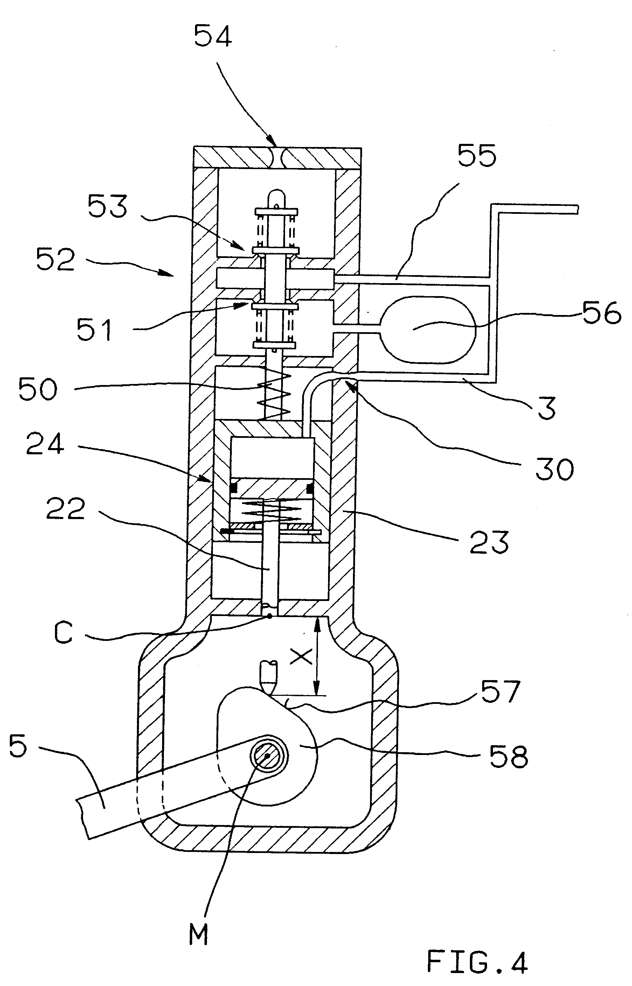

Das Ausführungsbeispiel nach Fig.4 entspricht mit Ausnahme der Art der Auswertung des Achslastsignals dem Ausführungsbeispiel nach Fig.2.

Dieses Ausführungsbeispiel weist anstelle des elektrischen Wegsensors (28) ein insgesamt mit (52) bezeichnetes Niveauregelventil auf, an dessen Druckausgang die Druckmittelleitung (3) über eine Verbindungsleitung (55) angeschlossen ist. Der hier mit (22, 24, 50) bezeichnete Stößel ist als Stellglied des Niveauregelventils (52) ausgebildet. Das bedeutet, daß die das Achslastsignal bildende resultierende Verschiebung des hier mit (50) bezeichneten anderen Endstücks des Stößels (22, 24, 50) direkt zur Steuerung des Einlaßventils (51) und des Auslaßventils (53) des Niveauregelventils (52) herangezogen wird. Je nach resultierender Verschiebung des Endstücks (50), (d.h. je nach Achslastsignal) wird in an sich bekannter Weise der Liftbalg (1) über das Einlaßventil (51) mit einem Druckmittelvorrat (56) oder über das Auslaßventil (53) mit einem Druckentlastungsanschluß (54) verbunden. Dadurch wird in ebenfalls bekannter Weise ein Soll-Abstand des Punktes (B) an der Antriebsachse (9) im wesentlichen in Richtung der Achslast zu einem beliebigen Punkt des Fahrzeugoberbaus (2) und damit die Achslast der Antriebsachse (9) eingeregelt. Das Ausführungsbeispiel stellt damit eine einfache Einrichtung zur Traktionssteuerung dar.

Die hier mit (57) bezeichnete Kontur des hier mit (58) bezeichneten Signalkörpers braucht nicht die Federcharakteristik der Blattfeder (8) und des Liftbalgs (1) und auch nicht den bereits erwähnten Wegsprung der Antriebsachse (9) beim Zu- und Abschalten der Liftachse (12) zu berücksichtigen. Die Kontur (57) kann deshalb darauf beschränkt sein, einen linearen Zusammenhang zwischen dem genannten Weg des Punktes (B) und dem Abstand (x) zu definieren.

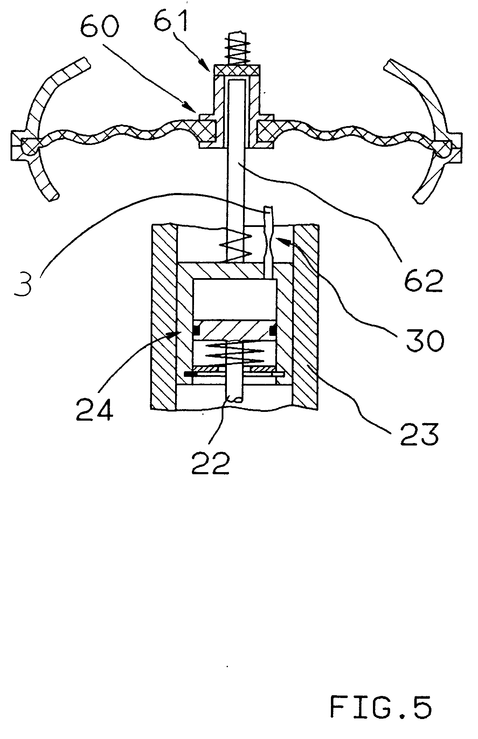

Beim Ausführungsbeispiel nach Fig.5 ist der dort mit (22, 24, 62) bezeichnete Stößel als Stellglied eines lastabhängigen Bremskraftreglers, abgekürzt ALB, ausgebildet, der in bekannter stößelgesteuerter Bauart ausgeführt ist und schematisch durch sein Regelventil (61) und seine Regelkolbeneinheit (60) angedeutet ist. Bei diesem Ausführungsbeispiel wird das von dem anderen Endstück (62) gelieferte Achslastsignal in Form von dessen resultierender Verschiebung direkt zur Betätigung des Regelventils (61) des ALB herangezogen.

Im übrigen gelten, soweit sich aus den vorstehenden Ausführungen nichts anderes ergibt, die für ein Ausführungsbeispiel gegebenen Erläuterungen für die anderen Ausführungsbeispiele in entsprechender Anwendung mit. Es liegt auf der Hand, daß auch mehrere Einrichtungen zur Gewinnung eines Achslastsignals und/oder zu dessen Auswertung, insbesondere der vorstehend erwähnten Arten, gleichzeitig, beispielsweise parallel oder winkelversetzt, mit getrennten Gehäusen oder mit gemeinsamem Gehäuse, vorgesehen sein können.

Der Fachmann erkennt auch, daß die in den Ausführungsbeispielen in bzw. an dem Gehäuse (23) angeordneten erfindungswesentlichen Elemente auch ohne gemeinsames Gehäuse angeordnet werden können, sofern sie nur den erfindungswesentlichen Bedingungen, beispielsweise Elemente des Fahrzeugoberbaus bzw. der Antriebsachse bzw. des Lift-Achsaggregats zu sein, genügen.

Schließlich erkennt der Fachmann, daß sich der Schutzbereich der Erfindung nicht in den Ausführungsbeispielen erschöpft, sondern alle Ausgestaltungen umfaßt, deren Merkmale sich den Patentansprüchen unterordnen.

## Patentansprüche

1. Einrichtung zur Gewinnung eines Achslastsignals der mechanisch gefederten Antriebsachse (9) eines aus der Antriebsachse (9) und einer durch Druckbeaufschlagung wenigstens eines Druckmittelelements mit wenigstens einem Abschaltdruck abschschaltbaren Liftachse (12) bestehenden Lift-Achsaggregats, mit den Merkmalen:
a) Die Einrichtung weist einen Signalkörper (34, 36; 58) auf, der abhängig vom Weg eines Punktes (B) der Antriebsachse (9) relativ zum Fahrzeugoberbau (2) um eine am Fahrzeugoberbau (2) feste Drehachse (M) drehbar ist;
b) die Mantelfläche des Signalkörpers (34, 36; 58) weist wenigstens eine Kontur (20, 21; 57) auf, die für jede Drehstellung des Signalkörpers (34, 36; 58) einen vorbestimmten Abstand (x) im wesentlichen quer zu der Drehachse (M) von einem Punkt (C) des Fahrzeugoberbaus (2) einnimmt;
c) die Einrichtung weist einen am Fahrzeugoberbau (2) axial verschiebbar geführten und die Mantelfläche des Signalkörpers (34, 36; 58) abtastenden Stößel (22, 24, 26; 22, 24, 40; 22, 24, 50; 22, 24, 62) auf,
dadurch gekennzeichnet,
daß der Stößel (22, 24, 26; 22, 24, 40; 22, 24, 50; 22, 24, 62) aus Endstücken (22, 26; 22, 40; 22, 50; 22, 62) und einer dazwischen angeordneten, mit dem Druck des Druckmittelelements beaufschlagbaren und die Stößellänge abhängig von diesem Druck einstellenden Zylindereinheit (24) besteht, wobei die Verschiebung des der Mantelfläche des Signalkörpers (34, 36; 58) abgewandten Endstücks (26; 40; 50; 62) das Achslastsignal bildet.

2. Einrichtung nach Anspruch 1, dadurch gekennzeichnet, daß der Stößel (22, 24, 26; 22, 24, 40) als Fühler eines elektrischen Wegsensors (28) ausgebildet ist.

3. Einrichtung nach Anspruch 1, dadurch gekennzeichnet, daß der Stößel (22, 24, 50) als Stellglied eines Niveauregelventils (52) ausgebildet ist.

4. Einrichtung nach Anspruch 1, dadurch gekennzeichnet, daß der Stößel (22, 24, 62) als Stellglied eines lastabhängigen Bremskraftreglers (60, 62) ausgebildet ist.

5. Einrichtung nach einem der vorhergehenden Ansprüche, dadurch gekennzeichnet, daß in der Zuleitung (3) des Drucks zu der Zylindereinheit (24) eine Drossel (30) angeordnet ist.

## Claims

1. A device for obtaining an axle load signal from the mechanically sprung driven axle (9) of a lifting axle assembly consisting of the driven axle (9) and a lifting axle (12) which is arranged to be disengaged by pressurization of at least one pressure medium element with at least one disengagement pressure, having the following features:
a) the device has a signalling body (34, 36; 58) which is rotatable about a fixed axis of rotation (M) on the vehicle bodywork (2) depending on the displacement of a point (B) on the driven axle (9) relative to a the vehicle bodywork (2);
b) the outer surface of the signalling body (34, 36; 58) has at least one contour (20, 21; 57) which for each rotated position of the signalling body (34, 36; 58) takes up a predetermined distance (x) from a point (C) on the vehicle bodywork (2) substantially transversely to the axis of rotation (M);
c) the device has a plunger (22, 24, 26; 22, 24, 40; 22, 24, 50; 22, 24, 62) guided in an axially displaceable manner on the vehicle bodywork (2) and scanning the outer surface of the signalling body (34, 36; 58),
characterized in that the plunger (22, 24, 26; 22, 24, 40; 22, 24, 50; 22, 24, 62) consists of end pieces (22, 26; 22, 40; 22, 50; 22, 62) and a cylinder unit (24) arranged between them which is arranged to be pressurized with the pressure of the pressure medium element and adjusts the plunger length in dependence on this pressure, the displacement of the end piece (26; 40; 50; 62) remote from the outer face of the signalling body (34, 36; 58) forming the axle load signal.

2. A device according to claim 1, characterized in that a plunger (24; 24, 26; 22, 24, 40) is in the form of a feeler of an electrical displacement sensor (28).

3. A device according to claim 1, characterised in that the plunger (22, 24, 50) is in the form of a setting member of a level-regulating valve (52).

4. A device according to claim 1, characterized in that the plunger (22, 24, 62) is in the form of a setting member of a load-dependent brake force regulator (60, 62).

5. A device according to one of the preceding claims, characterized in that a throttle (30) is arranged in the pressure admission line (3) to the cylinder unit (24).

## Revendications

1. Dispositif d'obtention d'un signal de charge d'un essieu moteur à suspension mécanique (9) appartenant à un train de roulement doté d'un essieu relevable et constitué par ledit essieu moteur (9) et par un essieu relevable (12) inactivable par application d'au moins une pression d'inactivation à au moins un élément à fluide de pression, avec les caractéristiques suivantes :
a) le dispositif présente un organe de signalisation (34, 36; 58) qui, en fonction du déplacement du point (B) de l'essieu moteur par rapport à la superstructure (2) du véhicule, peut tourner autour d'un axe de rotation (M) fixe sur la superstructure (2) du véhicule;
b) la surface périphérique de l'organe de signalisation (34, 35; 58) présente au moins un contour (20, 21; 57) qui, pour chaque position angulaire ou position de rotation de l'organe de signalisation (34, 36; 58), se situe à une distance prédéterminée (X) du point (C) de la superstructure du véhicule, cette distance étant sensiblement transversale par rapport à l'axe de rotation (M);
c) le dispositif présente un taquet-palpeur (22, 24, 26; 22, 24, 40; 22, 24, 50; 22, 24, 62) qui palpe la surface périphérique de l'organe de signalisation (34, 36; 58) et qui est guidé à coulissement axial,
caractérisé
par le fait que le taquet-palpeur (22, 24, 26; 22, 24, 40; 22, 24, 50; 22, 24, 62) est constitué par des parties extrêmes (22, 26; 22, 40; 22, 50; 22, 62) et par une unité-vérin à cylindre (24) agencée entre elles, laquelle peut être sollicitée par la pression de l'élément à fluide de pression et règle la longueur du taquet-palpeur en fonction de cette pression, le déplacement de la partie extrême (26; 40; 50; 62) éloignée de la surface périphérique de l'organe de signalisation (34, 36; 58) formant le signal de charge d'essieu.

2. Dispositif selon revendication 1, caractérisé par le fait que le taquet-palpeur (22, 24, 26; 22, 24, 40) est conçu-réalisé en tant que capteur électrique de distance ou déplacement (28).

3. Dispositif selon revendication 1, caractérisé par le fait que le taquet-palpeur (22, 24, 50) est conçu-réalisé en tant qu'organe de réglage d'une vanne de réglage de niveau (52).

4. Dispositif selon revendication 1, caractérisé par le fait que le taquet-palpeur (22, 24, 62) est conçu-réalisé en tant qu'organe de réglage d'un régulateur de force de freinage (60, 62) en fonction de la charge.

5. Dispositif selon l'une des revendications précédentes, caractérisé par le fait qu'un organe d'étranglement (30) est agencé dans la conduite (3) amenant la pression à l'unité-vérin à cylindre (24).
